# EUROPÄISCHE PATENTSCHRIFT

(11) **EP 2 246 562 B1**
(45) Veröffentlichungstag und Bekanntmachung des Hinweises auf die Patenterteilung: **29.06.2016**
(21) Anmeldenummer: 10159264.0
(22) Anmeldetag: 07.04.2010
(51) Int. Cl.: F16H 1/46, F16H 57/04

(54) **Getriebe einer Windenergieanlage**
Gearbox for a wind turbine
Engrenage d'une éolienne

(30) Priorität: 17.04.2009 DE 102009017521
(43) Veröffentlichungstag der Anmeldung: 03.11.2010
(73) Patentinhaber: Senvion GmbH, 22297 Hamburg (DE)
(72) Erfinder: Hopp, Eckart, 24790 Schülldorf (DE)
(74) Vertreter: Seemann, Ralph

(56) Entgegenhaltungen:
- DE-A1- 3 231 016
- DE-A1- 3 702 008
- DE-A1- 10 226 523
- DE-A1-102007 029 469

## Beschreibung

Die Erfindung betrifft ein Getriebe einer Windenergieanlage mit einem Ölsumpf sowie ein mehrstufiges Getriebe einer Windenergieanlage. Darüber hinaus betrifft die Erfindung eine Windenergieanlage. Windenergieanlagen der Patentanmelderin sind unter der Bezeichnung 5M, MM92, MM82, MM70 sowie MD77 bekannt. Die Windenergieanlagen können sowohl auf dem Boden (onshore) oder in Gewässern (offshore) errichtet werden.

Bei Windenergieanlagen sind die Rotoren der Windenergieanlage über einen Triebstrang mit einem Getriebe und einem Generator verbunden. Hierbei weist die Windenergieanlage in der Regel eine Rotorwelle auf, an deren einem Ende die Rotorwelle mit dem Rotor und an ihrem anderen Ende mit dem Getriebe gekoppelt ist. Die Rotorblätter der Windenergieanlage sind an einer Rotornabe befestigt, die ihrerseits wiederum mit der Rotorwelle verbunden ist. Die Drehbewegung des Rotors wird über die Rotorwelle auf das Getriebe übertragen, so dass das Getriebe über einen generatorseitigen Abtrieb mit einem Generator in Wirkverbindung ist.

Bei gattungsgemäßen Windenergieanlagen kann das Getriebe mehrstufig ausgebildet sein, wobei das Getriebe in der Regel eine oder mehrere Planetenstufen sowie gegebenenfalls eine oder weitere Getriebestufen (Stirnradstufen) aufweist.

Häufig ist die erste Getriebestufe eines mehrstufigen Getriebes bei gattungsgemäßen Windenergieanlagen als Planetenstufe ausgebildet, wobei der Rotor mit dem Planetenradträger oder dem Hohlrad der Planetenstufe gekoppelt ist. Hierbei besteht die Planetenstufe im Allgemeinen aus einem Sonnenrad, um das mehrere, mit dem Sonnenrad kämmende Planetenräder angeordnet sind, wobei die Planetenräder in einem Planetenradträger gelagert sind. Das Sonnenrad, die Planetenräder und Teile des Planetenradträgers sind von einem Hohlrad umgeben, wobei das Hohlrad so ausgebildet ist, dass es mit den Planetenrädern kämmt. Entsprechend der Getriebeübersetzungsrichtung wird entweder das Sonnenrad oder der Planetenradträger bzw. das Hohlrad angetrieben.

Beispielsweise sind in DE-B-103 57 026 sowie DE-B-103 34 448 Windenergieanlagen mit mehrstufigen Getrieben beschrieben.

Die mehrstufigen Getriebe der Windenergieanlagen werden mittels eines Ölkreislaufes gekühlt, wobei eine Pumpe Getriebeöl durch Filter bzw. Filterelemente in einen Kühlkreislauf pumpt. Die Filter, insbesondere Grob- und Feinfilter, entfernen die Feststoffe oder Partikel aus dem Getriebeöl. Das gekühlte Öl wird weiterhin über ein entsprechendes Leitungssystem gezielt an die thermisch hochbelasteten Bauteile des Getriebes und an weitere Stellen mit Schmierungsbedarf, wie z.B. Lager oder Verzahnungen, gefördert.

In der Regel werden elektrische oder mechanisch angetriebene Pumpen eingesetzt, um die belasteten Komponenten eines Getriebes mit Schmiermitteln bzw. Öl zu versorgen. Hierbei wird das Öl mittels der Ölpumpen aus einem Ölsumpf bzw. Ölvorrat aus dem Getriebe gefördert und mittels entsprechender Verteileinrichtungen an die zu versorgenden Getriebekomponenten verteilt. Im normalen Betrieb einer Windenergieanlage ist eine elektrische Pumpe vorgesehen, um das Öl aus dem Ölsumpf des Getriebegehäuses zu fördern und in einen getriebeexternen Vorratsbehälter zu pumpen. Aus dem Vorratsbehälter wird anschließend das gefilterte Öl zurück in das Gehäuse an die entsprechenden Stellen bzw. Komponenten des Getriebes gefördert.

In DE-A-10 2007 029 469 ist beispielsweise ein Windenergieanlagengetriebe sowie ein Verfahren zu dessen Ölversorgung beschrieben.

Darüber hinaus ist aus DE-A-37 02 008 ein Verfahren zur Schmierung eines Getriebes für Windenergieanlagen offenbart.

In DE-A-32 31 016 ist ein Getriebe für einen Windkraftgenerator auf einen Maschinenturm offenbart. Das Getriebe weist hierbei ein Ablaufrohr und ein Zuflussrohr auf. Darüber hinaus ist auch ein separater Bypass als Überlaufrohr am Getriebe vorgesehen, so dass bei Erreichen eines Niveaus des Ölbads das Öl in dem Bypass überläuft.

Ausgehend von diesem Stand der Technik besteht die Aufgabe der Erfindung darin, sowohl im Betrieb als auch bei Stillstand oder im Trudelbetrieb einer Windenergieanlage, vorzugsweise permanent, einen ausreichend hohen Füllstand von Öl im Getriebe bereitzustellen, wobei der Aufwand möglichst gering gehalten werden soll.

Gelöst wird diese Aufgabe durch ein Getriebe einer Windenergieanlage bzw. ein Windenergieanlagengetriebe mit einem Ölsumpf, das dadurch weitergebildet wird, dass wenigstens eine, am oder im Öl-sumpf angeordnete, Ablaufleitung für Öl aus dem Ölsumpf eine in dem Ölsumpf angeordnete Einlauföffnung aufweist, wobei die Einlauföffnung der Ablaufleitung unterhalb eines vorbestimmten Minimums eines Ölfüllstandniveaus (> 0) des Ölsumpfes angeordnet ist und wobei in der Ablaufleitung oberhalb der Einlauföffnung eine vom Öl des Ölsumpfes durchfließbare oder durchströmbare bzw. durchströmte Durchbrechung, auf Höhe des Minimums des Ölfüllstandniveaus, ausgebildet ist, so dass ein vorbestimmtes Ölfüllstandsniveau, das mindestens gleich dem oder größer als das Minimum des Ölfüllstandsniveaus ist, im Betrieb der Windenergieanlage und/oder während des Stillstands und/oder während des Trudelbetriebs der Windenergieanlage, vorzugsweise permanent, bereitgestellt ist.

Die Erfindung beruht auf dem Gedanken, dass in einem Getriebe einer Windenergieanlage in jeder Anlagensituation wie z.B. Betriebszustand (Energieerzeugung), Trudelbetrieb oder Stillstand ein Leerlaufen eines Ölsumpfes im Getriebe verhindert wird. Üblicherweise befindet bzw. sammelt sich das Öl im Ölsumpf, wobei unter einem Ölsumpf ein beliebiger Ölvorrat verstanden wird. Hierbei kann das Öl ein pflanzlicher, mineralischer, teil- oder vollsynthetischer Schmierstoff sein.

Gemäß der Erfindung ist die Einlauföffnung der Ablaufleitung in den Ölsumpf dauerhaft eingetaucht, wobei an die Ablaufleitung im Betrieb einer Windenergieanlage eine Ölpumpe angeschlossen ist, um das Öl aus dem Ölsumpf abzupumpen und nach seiner Aufbereitung in bzw. durch Filter- und/oder Kühleinrichtungen für den Ölkreislauf bereitzustellen. Hierbei wird an der Einlauföffnung das Öl angesaugt. Erreicht das Ölfüllstandsniveau das Minimum, an dem eine Durchbrechung, z.B. ein Loch in der Ablaufleitung, vorgesehen ist, so wird anstelle von Öl nunmehr Luft durch die Durchbrechung von der Pumpe angesaugt. Damit wird während des Betriebs ein Leerlaufen des Ölsumpfes verhindert, da bei Erreichen des minimalen Ölfüllstands des Sumpfes kein Öl mehr aus dem Ölsumpf angesaugt wird.

Bei Erreichen des minimalen Ölstandes im Getriebe wird somit kein weiteres Öl aus dem Ölsumpf bzw. dem Getriebe entfernt. Dadurch wird stets eine vorbestimmte minimale Ölmenge im Getriebe für die zu schmierenden Getriebekomponenten bereitgestellt, unabhängig davon, in welchem Betriebsmodus (Stromerzeugung oder Trudelbetrieb oder Stillstand) die Windenergieanlage sich befindet.

Als vorteilhafte Ausgestaltung wird ein Getriebe bereitgestellt, das dadurch weitergebildet ist, dass in der Ablaufleitung oberhalb der Einlauföffnung eine vom Öl des Ölsumpfes überströmbare Erhöhung als hydraulische Sperre der Ablaufleitung, insbesondere auf Höhe eines Maximums des Ölfüllstandniveaus, ausgebildet ist, so dass ein vorbestimmtes Ölfüllstandsniveau, das mindestens gleich dem oder kleiner als das Maximum des Ölfüllstandsniveaus ist, im Betrieb der Windenergieanlage und/oder während des Stillstands der Windenergieanlage, vorzugsweise permanent, bereitgestellt ist.

Hierdurch ist es möglich, dass der Ölsumpf im Getriebe nicht über ein maximales Niveau im Getriebe ansteigt, so dass nach Erreichen des Öl-Maximalstandes das überschüssige Öl sofort bzw. unmittelbar aus dem Getriebe selbstständig oder selbsttätig durch Überströmung der Erhöhung abfließt, unabhängig davon, ob eine an die Ablaufleitung angeschlossene, vorzugsweise elektrische, Ölpumpe eingeschaltet oder nicht aktiviert ist. Hierzu muss die Entlüftung der Ablaufleitung sichergestellt sein.

Darüber hinaus ist in einer Weiterbildung des Getriebes vorgesehen, dass mittels der wenigstens einen Ablaufleitung ein Ölfüllstandniveau zwischen einem Maximum des Ölfüllstandniveaus und dem Minimum des Ölfüllstandsniveaus (> 0) bereitgestellt ist oder wird. Hierdurch wird die Ölmenge des Ölsumpfes zwischen einem Ölfüllstandsmaximum und einem Ölfüllstandsminimum, insbesondere selbstregulierend, gehalten, so dass weder zuviel noch zu wenig Öl im Ölsumpf vorhanden ist.

Dazu ist weiter vorgesehen, dass das Ölfüllstandsniveau, insbesondere zwischen dem Maximum und dem Minimum, selbsttätig oder selbstregulierend auf passive Weise, vorzugsweise bei nicht eingeschalteter Saugpumpe an der Ablaufleitung, z.B. im Stillstand oder Trudelbetrieb der Windenergieanlage, bereitgestellt wird oder ist. Dadurch stellt sich von alleine, d.h. ohne dass eine Pumpe eingeschaltet werden muss, ein Ölstand im Getriebe ein, so dass ausreichend Öl auch während einer Störsituation, z.B. einem geplatzten Ölschlauch, im Getriebe vorhanden ist. Ein Leerlaufen des Öls am Getriebeboden wird dadurch verhindert.

Insgesamt wird durch das erfindungsgemäße Getriebe eine einfache und robuste Konstruktion bereitgestellt, mittels der eine passive Nivellierung des Ölstands bei einer Fehlfunktion bzw. einem Ausfall der Ölschmieranlage erfolgt und außerdem die Ablagerung von Partikeln im Ölsumpf verhindert wird, da im Normalbetrieb die Saugleistung einer an die Ablaufleitung angeschlossenen Pumpe so dimensioniert ist, dass trotz der kleinen Durchbrechung in der Ablaufleitung bzw. Belüftungsbohrung Partikel und Ölschlamm vom Gehäuseboden abgesaugt werden und dem nachfolgenden Filtersystem zugeleitet werden. Tritt dagegen eine Störung auf, wird der minimale Ölstand stets eingehalten, wodurch ein Notbetrieb des Getriebes der Windenergieanlage ermöglicht wird, wobei kein Öl mehr aus dem Ölsumpf abläuft, wenn die Belüftungsbohrung bzw. die Durchbrechung in der Ablaufleitung Luft zieht.

Wird eine Windenergieanlage, z.B. bei einem Netzausfall, stillgesetzt, sammelt sich eine große Menge Öl, das im gesamten Getriebe in Lagern, Verzahnungen, Gehäuseteilen etc. verteilt ist, im Ölsumpf am Getriebeboden. Um einen zu hohen Ölstand des Ölsumpfs im Getriebe bei einer Stillsetzung im Normalbetrieb zu verhindern, bei dem die sich bewegenden Getriebeteile das Öl durch Planschverluste erwärmen und/oder die Gefahr von Schaumbildung besteht, wird das überschüssige Öl oberhalb des Maximums über die Ablaufleitung aus dem Getriebe abgeführt. Beispielsweise kann schäumendes Öl im Getriebe nicht mehr eine zuverlässige Schmierung der Komponenten gewährleisten.

Durch den Anstieg des Öls auf ein Maximalniveau mit anschließendem Abfluss des überschüssigen Öls bzw. Ableitung über die Ablaufleitung ist sichergestellt, dass der Ölstand des Ölsumpfs nicht passiv über das Maximalniveau ansteigen kann. Somit werden gemäß den erfindungsgemäßen Gedanken ein Minimal-Ölstand und ein Maximal-Ölstand passiv begrenzt. Insbesondere besteht zwischen dem Minimal-Ölstand und dem Maximal-Ölstand ein ausreichender Abstand, um zu verhindern, dass der Ölstand im Normalbetrieb kurzfristig auf das Minimum abfällt und die eingeschaltete, vorzugsweise elektrische, Ölpumpe entsprechend dann Luft zieht.

Das von einer eingeschalteten Ölpumpe abgeführte Öl bzw. der vom Gehäuseboden entfernte Ölschlamm wird z.B. im Normalbetrieb entsprechend abgesaugt und einem nachfolgenden Filtersystem zugeleitet, um Partikel aus dem Öl zu entfernen.

Insbesondere zeichnet sich eine Weiterbildung des Getriebes dadurch aus, dass die Ablaufleitung nach Art eines umgedrehten Siphons oder nach Art eines, vorzugsweise auf den Kopf, umgedrehten U ausgebildet ist. Hierbei ist die Einlassöffnung der Ablaufleitung am Boden des Getriebes angeordnet und mit einer Durchbrechung bzw. Belüftungsbohrung auf dem Niveau des gewünschten minimalen Ölstands des Ölsumpfs versehen. In Abfließrichtung bzw. Saugrichtung der Ablaufleitung steigt die Ablaufleitung nach der Einlassöffnung bzw. weist einen ansteigenden Steigleitungsabschnitt auf, der in einen gebogenen Übergangsabschnitt mit einer Erhebung übergeht, so dass durch die Erhebung in der Ablaufleitung ein zulässiger Maximalstand des Ölstands begrenzt wird, wobei im Anschluss an den gebogenen Übergangsabschnitt in einen abfallenden Leitungsabschnitt ein Abfluss des Schmierstoffs bzw. des Öls zu einer Schmieranlage mit Pumpe und/oder mit Filter ausgebildet ist. Hierbei begrenzt bei der Ausbildung der Ablaufleitung nach Art eines umgekehrten Siphons das (untere) Knie bzw. die Biegung des Siphons den maximalen Ölstand des Ölsumpfs im Getriebe.

Außerdem ist in einer Weiterbildung vorgesehen, dass die Ablaufleitung auf einer dem Ölsumpf abgewandten Seite, vorzugsweise in Fließrichtung des Öls aus dem Ölsumpf in die Ablaufleitung, einen Steigleitungsabschnitt und/oder eine Erhöhung, mittels der das Maximum des Ölfüllstandsniveaus vorbestimmt wird oder ist, aufweist.

Insbesondere ist an der Ablaufleitung auf der dem Ölsumpf abgewandten Seite eine Saugeinrichtung, insbesondere eine Pumpe, angeordnet. Dabei ist als Saugeinrichtung eine mit dem Getriebe gekoppelte mechanische Zahnradpumpe vorgesehen, die bei einem längeren Netzausfall und Trudelbetrieb ausreichend Öl zur Schmierung aller Stufen fördert. Darüber hinaus ist als Saugeinrichtung auch (zusätzlich oder alternativ) eine elektrische Pumpe vorgesehen, die im Normalbetrieb entsprechend bedarfsorientiert Öl aus dem Ölsumpf ansaugt.

Um Ölschlamm bzw. Partikel in Öl, die sich im unteren Bereich des Ölsumpfs ansammeln, aus dem Getriebe zu entfernen, ist weiterhin vorgesehen, dass die Einlauföffnung der Ablaufleitung im Bereich eines Sammelbereiches für im Ölsumpf enthaltene Partikel angeordnet ist.

Im Rahmen der Erfindung ist es weiterhin auch denkbar, dass für das Getriebe sowie für eine Getriebestufe permanent ein konstant bleibendes Ölfüllstandsniveau des Ölsumpfes bereitgestellt wird. Dies wird beispielsweise dadurch erreicht, dass das vorbestimmte Minimum des Ölfüllstandsniveaus des Ölsumpfes dem Maximum des Ölfullstandsniveaus entspricht. Hierbei ist die Durchbrechung in der Ablaufleitung auf derselben Höhe wie die Erhöhung in der Ablaufleitung.

Des Weiteren ist es bevorzugt, wenn eine Ablaufleitung in einer Getriebestufe des Getriebes ausgebildet ist oder in mehreren Getriebestufen eines mehrstufigen Getriebes jeweils wenigstens eine (eigene) Ablaufleitung vorgesehen ist, wobei in einer oder in mehreren Getriebestufen ein vorbestimmtes Ölfüllstandniveau zwischen einem Maximum des Ölfüllstandniveaus der jeweiligen Getriebestufe und dem Minimum des Ölfüllstandsniveaus (> 0) der jeweiligen Getriebestufe bereitgestellt wird oder ist. Außerdem ist es auch denkbar, dass für jede Getriebestufe mit einer eigenen Ablaufleitung ein konstantes Ölfüllstandsniveau dauerhaft bereitgestellt wird.

Darüber hinaus wird die Aufgabe gelöst durch ein mehrstufiges Getriebe einer Windenergieanlage, das dadurch weitergebildet wird, wenigstens zwei Getriebestufen jeweils einen eigenen Ölsumpf mit jeweils einem vorbestimmten bereitgestellten Ölfüllstandsniveau (> 0) aufweisen, wobei die vorbestimmten Ölfüllstandsniveaus von verschiedenen Ölsümpfen zweier Getriebestufen, insbesondere im Stillstand oder im Trudelbetrieb der Windenergieanlage bzw. des Getriebes, sich unterscheiden, wobei sich das mehrstufige Getriebe dadurch auszeichnet, dass ein oder mehrere Getriebestufen mit wenigstens einer Ablaufleitung, wie sie voranstehend für ein Getriebe allgemein beschrieben ist, ausgebildet sind.

Hierbei beruht die Erfindung auf dem Gedanken, dass bei einem Getriebe mit einer oder mehreren Planetenstufen sowie ggf. einer oder weiteren Getriebestufen (Stirnradstufen) jede Getriebestufe mit einem eigenen Ölfüllstandsniveau betrieben wird, so dass die Getriebekomponenten jeder Getriebestufe ausreichend mit Schmieröl versorgt werden. Hierdurch wird für jede Getriebestufe genügend Öl jeweils bereitgestellt, wobei die Ablaufleitungen bzw. Saugleitungen der einzelnen Getriebestufen in einen gemeinsamen Vorratsbehälter für das Öl abgeleitet werden. Im Vorratsbehälter wird das Öl entsprechend durch eine Filterstufe und durch Kühlung aufbereitet, bevor es wieder in die einzelne Getriebestufe eingespritzt wird.

Darüber hinaus zeichnet sich eine Weiterbildung des mehrstufigen Getriebes dadurch aus, dass die vorbestimmten Ölfüllstandsniveaus von verschiedenen Ölsümpfen zweier Getriebestufen selbsttätig oder selbstregulierend auf passive Weise bereitgestellt werden oder sind, wodurch ein mehrstufiges Windenergieanlagengetriebe bereitgestellt wird, wobei mindestens zwei Getriebestufen einen Ölsumpf mit voneinander abweichenden Ölfüllständen sowie je eine Ablaufleitung aufweisen, durch die eine passive Regulierung des Ölstands im Ölsumpf entsprechend bereitgestellt wird. Somit ist sichergestellt, dass für jede Getriebestufe individuell das konstruktiv optimale Ölstandsniveau bereitgestellt wird.

Ferner wird die Aufgabe gelöst durch eine Windenergieanlage mit einem voranstehend beschriebenen Getriebe oder einem voranstehend beschriebenen mehrstufigen Getriebe. Hierbei wird auf die obigen Ausführungen zur Vermeidung von Wiederholungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Nachfolgend wird die Erfindung anhand von Ausführungsbeispielen ohne Beschränkung des allgemeinen Erfindungsgedankens exemplarisch beschrieben, wobei bezüglich aller im Text nicht näher erläuterten erfindungsgemäßen Einzelheiten ausdrücklich auf die Figuren verwiesen wird. Es zeigen:
- Fig. 1: schematisch einen Ölkreislauf eines Getriebes einer Windenergieanlage;
- Fig. 2a, 2b und 2e: schematisch jeweils einen Querschnitt durch eine Ablaufleitung am Getriebeboden eines Getriebes im Ausschnitt;
- Fig. 3: schematisch jeweils Weiterbildungen einer Ablaufleitung;
- Fig. 4: schematisch einen Querschnitt durch ein Gehäuse eines Getriebes mit einer Ablaufleitung;
- Fig. 5a bis 5c: schematisch jeweils Ansichten von verschiedenen Blendplatten einer Ablaufleitung in einem Getriebegehäuse und
- Fig. 6: einen schematischen Querschnitt durch ein mehrstufiges Getriebe einer Windenergieanlage, wobei jede Getriebestufe eine Ablaufleitung aufweist.

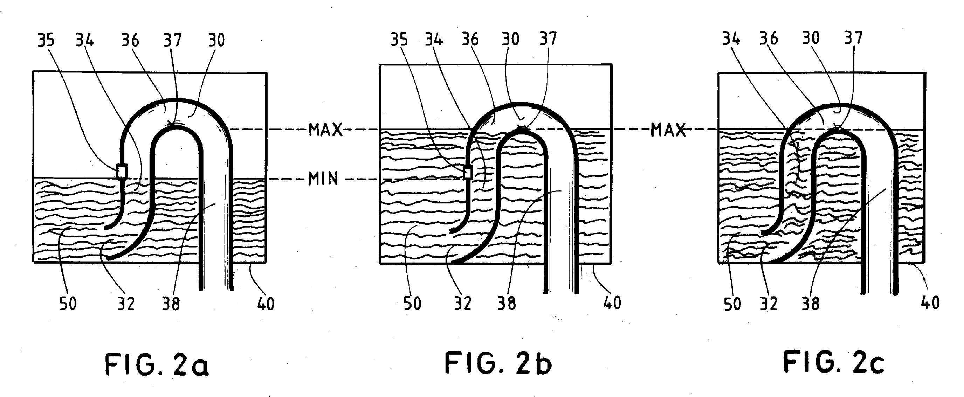

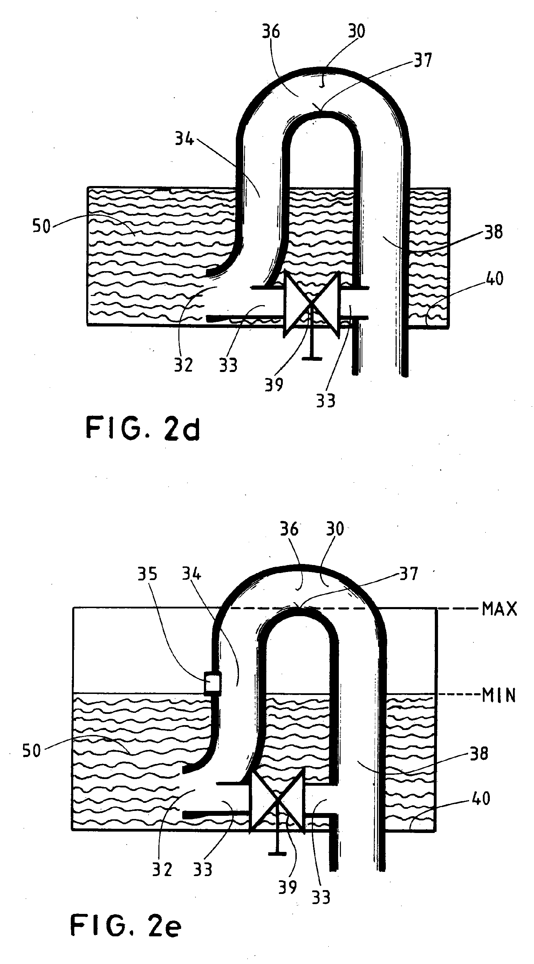

Fig. 2c und 2d zeigen Beispiele, die nicht Gegenstand der Erfindung sind.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

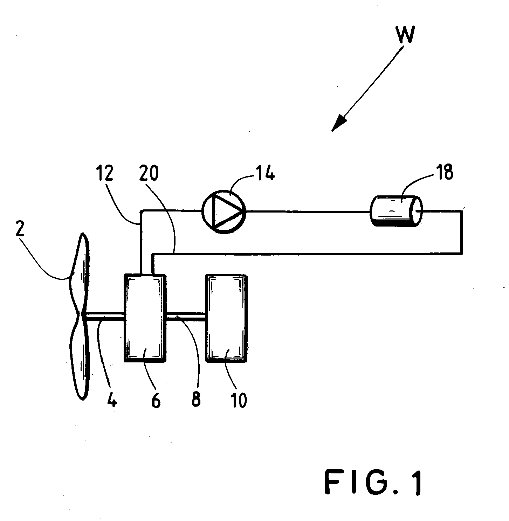

In Figur 1 ist schematisch eine schematisch bezeichnete Windenergieanlage W mit einem Triebstrang dargestellt. Vom Triebstrang der Windenergieanlage sind die Rotorblätter 2, die Rotorwelle 4, das Getriebe 6, die Generatorwelle 8 und der Generator 10 dargestellt. Das Getriebe 6 sorgt dafür, dass eine vergleichsweise langsame Umdrehung der Rotorwelle 4 in eine Rotation der Generatorwelle 8 mit hoher Umdrehungszahl umgesetzt wird.

Das Getriebe 6 ist Teil eines Getriebeflüssigkeitskreislaufs, das neben dem Getriebe 6 eine Leitung 12 für Getriebeöl, eine Ölpumpe 14, einen Ölfilter 18 und eine Rückleitung 20 für das Getriebeöl umfasst. Ein Ölzwischenbehälter oder eine Ölwanne sind nicht dargestellt, können aber vorhanden sein. Mittels des Ölfilters 18 werden Verschleißpartikel aus dem Getriebe 6 aus dem Kreislauf herausgefiltert.

In den Figuren 2a, 2b und 2c sowie in den Fig. 2d und 2e sind jeweils schematisch Querschnitte durch eine Ablaufleitung 30 am unteren Getriebeboden 40 eines Getriebes (vgl. Fig. 1, Bezugszeichen 6) einer Windenergieanlage dargestellt.

Über dem Getriebeboden 40 wird das im Getriebe befindliche Öl in einem Ölsumpf 50 gesammelt. Die Ablaufleitung 30 verfügt über eine im Ölsumpf 50 angeordnete Einlassöffnung 32, die im Bodenbereich nahe dem Getriebeboden 40 ölsumpfseitig angeordnet ist. Die Ablaufleitung 30 geht in einen ansteigenden Steigleitungsabschnitt 34 über, an dessen Ende an der Oberseite des Steigleitungsabschnitts 34 ein gebogenes Übergangsstück 36 angeordnet ist. Das Übergangsstück 36 ist nach Art eines Halbbogens ausgebildet.

An das Übergangsstück 36 schließt sich ein gerades Leitungsstück bzw. Leitungsabschnitt 38 an, an den eine Leitung für das Getriebeöl (vgl. Fig. 1, Bezugszeichen 12) angeschlossen ist, so dass mittels einer an die Ablaufleitung 30 verbundenen Ölpumpe das Öl aus dem Ölsumpf 50 angesaugt wird.

In den Figuren 2a und 2b verfügt der Steigleitungsabschnitt 34 über eine Bohrung 35, so dass die Bohrung 35 bzw. die Durchbrechung vom Öl des Ölsumpfs durchflossen wird, wenn sich das Niveau des Ölsumpfs oberhalb der Bohrung 35 befindet. Durch die Bohrung 35 wird das minimale Ölfüllstandsniveau MIN des Ölsumpfs 50 am Getriebeboden 40 begrenzt, da bei einer eingeschalteten Ölpumpe kein Öl aus dem Ölsumpf 50 angesaugt werden kann, wenn an der Bohrung 35 Luft angezogen wird.

Befindet sich das Ölfüllstandsniveau oberhalb der Bohrung 35, so wird sowohl über die Bohrung 35 als auch über die Einlassöffnung 31 Öl aus dem Ölsumpf 50 angesaugt, so dass in diesem Fall auch Ölschlamm oder Partikel im Öl, die sich am Getriebeboden 40 ablagern, aus dem Inneren des Getriebes entfernt werden.

Erreicht der Ölstand des Ölsumpfs 50 das Minimum, wird dadurch gewährleistet, dass eine vorbestimmte (minimale) Menge Öl im Getriebe verbleibt, wodurch gemäß dem in Fig. 2a dargestellten Ausführungsbeispiel eine Niveausicherung des Öls erreicht wird.

In Fig. 2b ist die Situation dargestellt, in der das Niveau des Ölstands des Ölsumpfes 50 ein Maximum MAX erreicht, wodurch die maximale Menge an Öl des Ölsumpfs 50 nach oben begrenzt ist. Dadurch, dass die Ablaufleitung 30 in den Ausführungsbeispielen gemäß Fig. 2a und 2b nach Art eines umgekehrten Siphons ausgebildet ist, wird nach Erreichen des maximalen Ölfüllstands des Ölsumpfs 50 das hinzukommende bzw. überschüssige Öl über die in Abflussrichtung höchste Stelle 37 im gebogenen Übergangsstück 36 abgefördert.

In Abfließrichtung des Öls aus dem Getriebe befindet sich im gebogenen Übergangsstück eine ausgebildete höchste Erhebung 37, durch die der maximale Ölfüllstand MAX begrenzt ist. Hierbei befindet sich die höchste Stelle bzw. die Erhebung 37 als hydraulische Sperre an der Innenseite des gebogenen Übergangsstücks 36. Auch im Falle eines Stillstehens der elektrischen Pumpe an der Ablaufleitung 30 fließt das Öl bei Erreichen des maximalen Ölfüllstands ab, da die stehende Pumpe die Ablaufleitung 30 nicht dicht verschließt.

Bei dem in Fig. 2c dargestellten Beispiel, welches kein Gegenstand der erfindungsgemäßen Lösung ist, verfügt die Ablaufleitung 30 im Steigleitungsabschnitt 34 über keine Bohrung, so dass gemäß dem in Fig. 2c dargestellten Beispiel der Ablaufleitung 30 der maximale Ölstand MAX des Ölsumpfs 50 begrenzt wird. Es findet bei dem in Fig. 2c dargestellten Beispiel keine Begrenzung eines minimalen Ölstands statt, da der Steigleitungsabschnitt 34 geschlossen ausgebildet ist.

Gegenüber dem in Fig. 2c dargestellten Beispiel ohne Niveausicherung verfügt die Ablaufleitung 30 in dem Beispiel in Fig. 2d, welches ebenfalls nicht Gegenstand der Erfindung ist, über eine Verbindungsleitung 33 nach Art einer Bypass-Leitung bzw. Überbrückungsleitung in der Nähe des Getriebebodens 40 zwischen dem Einlass 32 und dem geraden Leitungsabschnitt 38 bzw. zwischen dem unteren Ende des Steigleitungsabschnitts 34 und dem geraden Leitungsabschnitt 38 unterhalb der Erhebung 37.

Ferner ist bei der in Fig. 2e dargestellten Ablaufleitung 30 (mit Niveau-Sicherung) im Vergleich zu der in Fig. 2 a gezeigten Ablaufleitung 30 ebenfalls eine Verbindungsleitung 33 mit einem Ventil 39 zwischen dem Einlass 32 bzw. dem Steigleitungsabschnitt 34 und dem Leitungsabschnitt 38 unterhalb der Bohrung 35 bzw. unterhalb des minimalen Ölstands MIN ausgebildet.

Hierbei ist in oder an der Verbindungsleitung 33 ein Ventil 39 bzw. Steuerventil vorgesehen bzw. angeordnet, so dass im normalen Betrieb das Ventil 39 in Sperrstellung ist. Bevorzugterweise ist das Ventil 39 ein Ventil einfacher Bauart, das beispielsweise bei einer Durchführung eines Ölwechsels des Öls im Getriebe manuell für eine bestimmte Zeitdauer, d.h. temporär, geöffnet wird, um die direkte und vollständige Absaugung des Altöls über den Einlass 32 und die dann geöffnete Verbindungsleitung 33 in den Leitungsabschnitt 38 mit einem tieferliegenden Auslauf zu ermöglichen. Nachdem das alte Öl vollständig für den Ölwechsel aus dem Getriebe über die geöffnete Verbindungsleitung 33 abgelaufen bzw. entfernt ist, wird das Ventil 39 danach wieder geschlossen bzw. in Sperrstellung als Verschlusseinrichtung für die (Bypass-)Verbindungsleitung 33 gebracht, so dass neues Öl in das Getriebe eingebracht wird.

Während das Ventil 39 in der Verbindungsleitung 33 als Bypass geöffnet ist, wird dadurch die durchströmbare Durchbrechung bzw. Bohrung 35 in dem Steigleitungsabschnitt 34 (vgl. Fig. 2e) und/oder die überströmbare Erhöhung 37 (vgl. Fig. 2d und Fig. 2e) umgangen. Im normalen Betrieb des Getriebes bzw. der Ablaufleitung 30 ist das Ventil 39 vollständig geschlossen.

Das als Verschlusseinrichtung ausgebildete Ventil 39 ist bevorzugterweise so ausgeführt, dass das Ventil 39 im geöffneten Zustand die Verbindungsleitung 39 kaum oder nur unwesentlich im Querschnitt verengt.

Abweichend von den gezeigten Ausführungsformen ist es außerdem in weiteren Ausgestaltungen möglich, mittels weiterer Anordnungen von zusätzlichen Ölwechsel-Auslässen einen Ölwechsel durchzuführen. Soll das Öl jedoch beim Ölwechsel mit einer Pumpe abgesaugt werden, um möglichst viele abgelagerte Partikel vom Getriebeboden 40 zu entfernen, ist es erforderlich, jeden weiteren Ablauf mit zusätzlichen Verrohrungen auszubilden oder weitere Arbeitsschritte auszuführen.

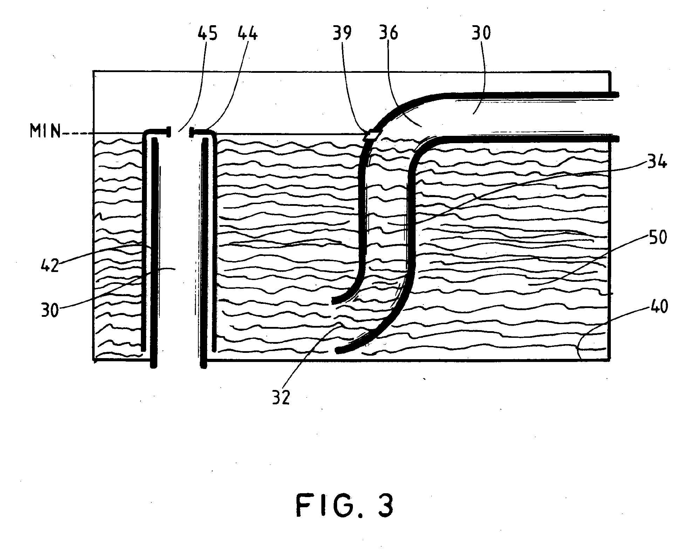

In Fig. 3 sind zwei Ausführungsbeispiele einer weiteren Ablaufleitung 30 für Öl aus dem Ölsumpf 50 dargestellt. Die rechte Ablaufleitung 30 ist nach Art einer S-förmigen Leitung am Getriebeboden 40 ausgebildet, wobei die Einlassöffnung 32 im Bereich des Getriebebodens 40 angeordnet ist. Der Steigleitungsabschnitt 34 ist geschlossen ausgebildet und geht in den nach Art eines Viertelkreises gebogenen Übergangsabschnitt 36 über. An der Seite des Übergangsabschnitts 36 ist eine Bohrung 39 bzw. Durchbrechung im Übergangsstück 36 ausgebildet, so dass bei Absinken des Ölfüllstandsniveaus des Ölsumpfs 50 auf das Minimum MIN durch die Bohrung 35 Luft gezogen wird, wodurch bei dem im rechten Ausführungsbeispiel dargestellten Beispiel der Ablaufleitung 30 der minimale Ölfüllstand im Getriebe begrenzt wird.

Bei dem in Fig. 3 im linken Bereich dargestellten Ausführungsbeispiel einer Ablaufleitung 30 ist ein umgekehrter Flaschensiphon vorgesehen, der aus einem geraden Rohrstück 42 besteht. Das Rohrstück 42 ist an der Oberseite umgeben von einem Dachgefäß 44 nach Art eines umgekehrten Bechers oder Behälters, das an der Oberseite eine Durchbrechung 45 aufweist. Hierdurch wird ebenfalls der minimale Ölfüllstand des Ölsumpfs 50 im Getriebe begrenzt.

Steigt der Ölstand über das gezeigte Minimum, fließt das Öl durch die Durchbrechung 45 direkt in die Ablaufleitung 30 ab, sodass das Minimum-Niveau dem Maximum-Niveau entspricht. Das Dachgefäß 44 ist vorteilhaft nach unten bis in den Bereich des Getriebebodens verlängert, um mittels der Ölpumpe Ölschlamm bzw. Partikel absaugen zu können.

Ist mehr Öl am Getriebeboden 40 vorhanden als die minimale Menge, so wird das Öl von der an die Ablaufleitung 30 angeschlossenen Ölpumpe abgefördert. Sinkt das Niveau des Öls ab, so dass die Bohrungen 39 bzw. 47 freigelegt werden, wodurch die an die Ablaufleitungen 30 angeschlossenen Ölpumpen anstelle von Öl Luft fördern, die dann durch die Bohrungen 39 bzw. 45 angesaugt wird.

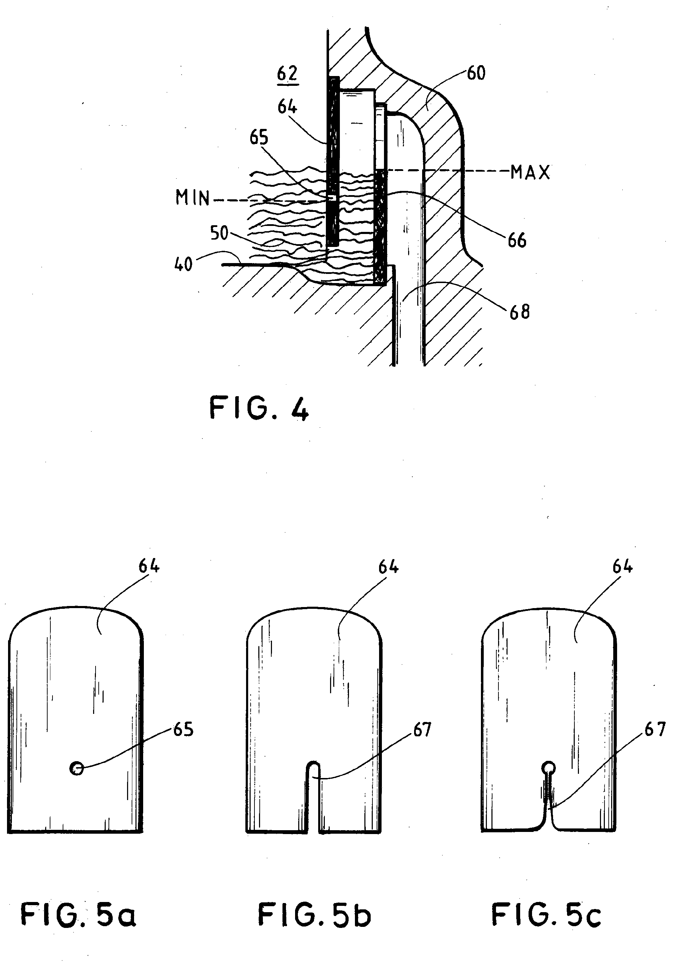

Bei dem in Fig. 4 dargestellten Ausführungsbeispiel einer Ablaufleitung, ist die Ablaufleitung in der Gehäuseaußenwand des Getriebes integriert. Ferner sind an der Getriebeinnenseite 62 des Getriebegehäuses 60 zwei Trennplatten 64, 66 parallel bzw. in einem vorbestimmten Abstand zueinander angeordnet. Hierbei ist die innere Trennplatte 64 so angeordnet, dass ein Freiraum zwischen der Unterseite der Trennplatte 64 und dem Getriebeboden 40 entsteht. Die äußere Trennplatte 66 sitzt auf dem Getriebeboden 60 auf und endet in einem vorbestimmten Abstand zu der oberen Gehäusewandung, so dass ein freier Raum oberhalb der Trennplatte 66 entsteht.

Auf der dem Getriebe abgewandten Seite verfügt das Gehäuse 60 im Bereich der Trennplatten 64, 66 über eine Leitung 68, an die eine Ölpumpe angeschlossen ist. Die innere Trennplatte 64 verfügt über eine Bohrung 65, durch die der minimale Ölstand des Ölsumpfs 50 vorgegeben ist bzw. begrenzt wird.

Durch das obere Ende der äußeren Trennplatte 66 wird der maximale Ölstand des Ölsumpfs 50 ebenfalls begrenzt. Erreicht der Ölfüllstand das Maximum MAX, so fließt das überschüssige Öl zwischen den Trennplatten 64, 66 und über die Oberseite der Trennplatte 66 und gelangt somit in die Leitung 68.

In den Figuren 5a bis 5c sind verschiedene Ausführungsformen der Trennplatte 64 aus Fig. 4 in einer schematischen Frontansicht dargestellt. Hierbei verfügt die Trennplatte 64 über eine Bohrung 65 gemäß dem Ausführungsbeispiel in Fig. 5a. Bei dem Ausführungsbeispiel gemäß Fig. 5b verfügt die Trennplatte 64 über eine Nut 67, wobei das Minimum des Ölstands durch die obere Kante der Nut 67 vorgegeben wird.

Die Ausführung mit Nut 67 weist den Vorteil auf, dass die Verstopfungsgefahr viel geringer als bei der Bohrung 65 ist. Zum anderen begrenzt die Nut 67 auch bei starker Pumpensaugleistung den minimalen Ölstand sehr sicher.

Je nach strömungstechnischen Erfordernissen können anstatt der gezeigten geraden Nutenform auch beliebige andere geometrische Ausführungsformen der Nut vorteilhaft sein, insbesondere Nuten, die sich nach unten aufweiten, z.B. dreieck-, trichter- oder auch parabelförmig. Eine derartige Formgebung ist beispielhaft in Fig. 5c gezeigt. Die Aufweitung der Nut 67 nach unten stellt eine besonders effektive Absaugung von Ölschlamm oder Partikeln vom Getriebeboden sicher.

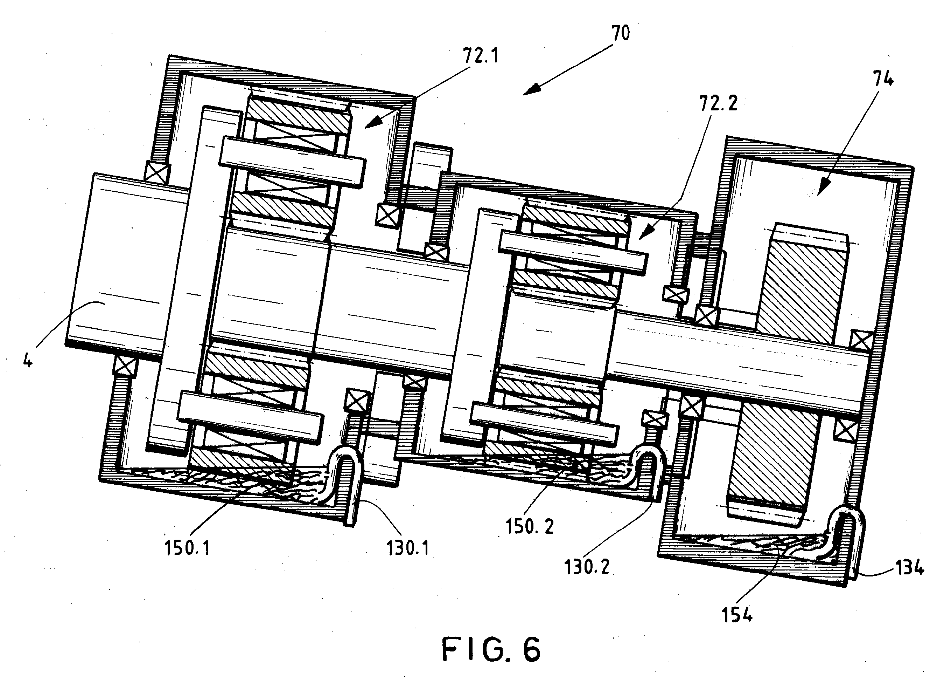

Fig. 6 zeigt schematisch einen Querschnitt durch ein mehrstufiges Getriebe einer Windenergieanlage, die mehrere Getriebestufen aufweist. Das mehrstufige Getriebe 70 besteht aus zwei hintereinander angeordneten Planetenstufen 72.1, 72.2, die in mechanischer Wirkverbindung miteinander stehen. Darüber hinaus steht die zweite Planetenstufe 72.2 mit der hinteren Stirnradstufe 74 des Getriebes 70 in Wirkverbindung.

Durch das mehrstufige Getriebe 70 wird die niedrige Drehzahl der Rotorwelle 4 über mehrere Stufen in eine hohe Drehzahl einer (nicht dargestellten) Abtriebswelle umgewandelt, die über eine Kupplung einen Generator antreibt. Im Rahmen der Erfindung ist es möglich, dass das mehrstufige Getriebe 70 auch eine Planetenstufe und zwei Stirnradstufen oder beliebig andere Kombinationen von Stufen aufweisen kann.

Da der Triebstrang der Windenergieanlage mit einer vorbestimmten Neigung zur Horizontalen geneigt ist, sind auch die Getriebestufen entsprechend zur Horizontalen geneigt.

Die einzelnen Getriebestufen 72.1, 72.2 und 74 sind bevorzugt hydraulisch gegeneinander abgedichtet, so dass kein Getriebeöl aus einer Getriebestufe in die benachbarten Getriebestufen gelangt, wodurch in jeder Getriebestufe ein vorbestimmter Ölstand jeweils ausgebildet wird.

Hierbei verfügt beispielsweise die Planetenstufe 72.1 über einen Ölsumpf 150.1 und die zweite Planetenstufe 72.2 über einen eigenen Ölsumpf 150.2. Auch die hintere Stirnradstufe 74 verfügt über einen Ölsumpf 154. Darüber hinaus ist bei jeder Planetenstufe eine Ablaufleitung 130.1, 130.2 bzw. 134 im Bereich des Bodens der Getriebestufe angeordnet, um Öl aus den jeweiligen Ölsümpfen 150.1, 150.2 bzw. 154 abzufördern.

Die Ablaufleitungen 130.1, 130.2 bzw. 134 sind insbesondere nach Art einer Ablaufleitung, wie sie in Fig. 2a, 2b dargestellt ist, ausgebildet. Das heißt, dass die Ablaufleitungen 130.1, 130.2, 134 über eine Einlassöffnung und in Abflussrichtung über einen ansteigenden Steigleitungsabschnitt mit einer Bohrung verfügen, wodurch der minimale Ölstand in den jeweiligen Getriebestufen vorgegeben ist. Die Ablaufleitungen 130.1, 130.2 und 134 sind nach Art eines umgekehrten Siphons ausgebildet, wodurch aufgrund der Erhöhung als hydraulische Sperre in der Ablaufleitung der maximale Ölstand in der Getriebestufe begrenzt wird.

Dadurch, dass in jeder Getriebestufe jeweils eine erfindungsgemäße Ablaufleitung ausgebildet ist, ist es möglich, unterschiedlich hohe Ölsümpfe an jeder Getriebestufe des mehrstufigen Getriebes 70 individuell und bedarfsgerecht einzustellen. Darüber hinaus wird aufgrund der Begrenzung der Ölstände auf einen minimalen Ölfüllstand für jede Getriebestufe ein Leerlaufen der Ölsümpfe 150.1, 150.2 und 154 in jeder Anlagensituation, auch bei einem geplatzten Ölschlauch, verhindert, wodurch die Laufeigenschaften der Getriebestufen 70.1, 70.2, 74 auch in einem Notfall oder bei einer Störung dann erhalten bleiben.

Insgesamt wird mit dem Getriebe 70 ein mehrstufiges Getriebe bereitgestellt, wobei wenigstens zwei Getriebestufen einen Ölsumpf mit voneinander abweichenden Ölständen sowie je eine Ablaufleitung aufweisen, durch die eine passive Regulierung der Ölstände zwischen einem Maximum und einem Minimum bereitgestellt wird.

Im Rahmen der Erfindung ist es selbstverständlich, dass die Getriebestufen 72.1, 72.2 und 74 jeweils entsprechende Öffnungen bzw. Auslässe für Ölwechsel aufweisen.

Um Öl aus den Ölsümpfen 150.1, 150.2 und 154 der Getriebestufen 72.1, 72.2 und 74 abzusaugen, sind an den Ablaufleitungen 130.1, 130.2 und 134 entsprechende mechanische Pumpen und elektrische Pumpen angeordnet. Die drei Ablaufleitungen 130.1, 130.2 und 134 bzw. vereinigen sich in einer Leitung, an der eine elektrische Saugpumpe und eine mechanische Zahnradpumpe angeordnet sind. Die mechanische Zahnradpumpe ist dabei in einer Ausgestaltung direkt im Getriebegehäuse hinter der hinteren Wandung der Stirnradstufe 74 unten angeordnet, so dass sie über die Ablaufleitung 134 der Stirnradstufe 74 Öl saugt.

Außerdem ist es im Rahmen der Erfindung denkbar, dass die beiden Planetenstufen 72.1, 72.2 zusätzliche Überläufe haben, aus denen Öl in die Stirnradstufe abfließt, wenn der Ölstand in den Stirnradstufen 72.1, 72.2 zu hoch ist. Somit kann die mechanische Pumpe auch bei einem längeren Netzausfall der Windenergieanlage und/oder im Trudelbetrieb der Windenergieanlage ausreichend Öl zur Schmierung aller Getriebestufen fördern, da das Öl aus den Ölsümpfen immer in die hintere Getriebestufe abfließt.

Ferner ist es auch denkbar, dass an der hinteren Stirnradstufe 74 lediglich der maximale Ölstand des Ölsumpfes 154 begrenzt wird, da insbesondere in der hochdrehenden Stirnradstufe 74 aufgrund der hohen Drehgeschwindigkeit der Komponenten die Gefahr von Schaumbildung im Öl besteht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Rotorblätter
- 4: Rotorwelle
- 6: Getriebe
- 8: Generatorwelle
- 10: Generator
- 12: Leitung für Getriebeöl
- 14: Ölpumpe
- 18: Ölfilter
- 20: Rückleitung für Getriebeöl
- 30: Ablaufleitung
- 32: Einlauföffnung
- 33: Verbindungsleitung
- 34: Steigleitungsabschnitt
- 35: Bohrung
- 36: Übergangsbogen
- 37: Erhebung
- 38: Leitungsabschnitt
- 39: Ventil
- 40: Getriebeboden
- 42: Rohrstück
- 44: Dachgefäß
- 50: Ölsumpf
- 60: Getriebegehäuse
- 62: Gehäuseinnenraum
- 64: Trennplatte
- 65: Bohrung
- 66: Trennplatte
- 67: Nut
- 68: Leitung
- 70: Getriebe
- 72.1: Planetenstufe
- 72.2: Planetenstufe
- 74: Stirnradstufe
- 130.1, 130.2: Ablaufleitung
- 134: Ablaufleitung
- 150.1: Ölsumpf
- 150.2: Ölsumpf
- 154: Ölsumpf
- W: Windenergieanlage

## Patentansprüche

1. Getriebe (6) einer Windenergieanlage (W) mit einem Ölsumpf (50, 150.1, 150.2, 154), wobei wenigstens eine am oder im Ölsumpf (50, 150.1, 150.2, 154) angeordnete Ablaufleitung (30, 130.1, 130.2, 134) für Öl aus dem Ölsumpf (50, 150.1, 150.2, 154) eine in dem Ölsumpf (50, 150.1, 150.2, 154) angeordnete Einlauföffnung (32) aufweist, und wobei die Einlauföffnung (32) der Ablaufleitung (30, 130.1, 130.2, 134) unterhalb eines vorbestimmten Minimums, größer als Null, eines Ölfüllstandniveaus des Ölsumpfes (50, 150.1, 150.2, 154) angeordnet ist, **dadurch gekennzeichnet, dass** in der Ablaufleitung (30, 130.1, 130.2, 134) oberhalb der Einlauföffnung (32) eine vom Öl des Ölsumpfes (50, 150.1, 150.2, 154) durchfließbare oder durchströmbare Durchbrechung (35) auf Höhe des Minimums des Ölfüllstandniveaus, ausgebildet ist, so dass ein vorbestimmtes Ölfüllstandsniveau, das mindestens gleich dem oder größer als das Minimum des Ölfüllstandsniveaus ist, im Betrieb der Windenergieanlage (W) und/oder während des Stillstands der Windenergieanlage (W), vorzugsweise permanent, bereitgestellt ist.

2. Getriebe (6) nach Anspruch 1, **dadurch gekennzeichnet, dass** in der Ablaufleitung (30, 130.1, 130.2, 134) oberhalb der Einlauföffnung (32) eine vom Öl des Ölsumpfes (50, 150.1, 150.2, 154) überströmbare Erhöhung (37) der Ablaufleitung (30, 130.1, 130.2, 134) auf Höhe eines Maximums des Ölfüllstandniveaus ausgebildet ist, so dass ein vorbestimmtes Ölfüllstandsniveau, das mindestens gleich dem oder kleiner als das Maximum des Ölfüllstandsniveaus ist, im Betrieb der Windenergieanlage (W) und/oder während des Stillstands der Windenergieanlage (W), vorzugsweise permanent, bereitgestellt ist.

3. Getriebe (6) nach Anspruch 2, **dadurch gekennzeichnet, dass** mittels der wenigstens einen Ablaufleitung (30, 130.1, 130.2, 134) ein Ölfüllstandniveau zwischen einem Maximum des Ölfüllstandniveaus und dem Minimum, größer als Null, des Ölfüllstandsniveaus bereitgestellt ist oder wird.

4. Getriebe (6) nach einem der Ansprüche 1 bis 3, **dadurch gekennzeichnet, dass** die Ablaufleitung (30, 130.1, 130.2, 134) nach Art eines umgedrehten Siphons oder nach Art eines, vorzugsweise auf den Kopf, umgedrehten U ausgebildet ist, so dass das Ölfüllstandsniveau selbsttätig oder selbstregulierend auf passive Weise bereitgestellt wird oder ist.

5. Getriebe (6) nach einem der Ansprüche 1 bis 4, **dadurch gekennzeichnet, dass** die Ablaufleitung (30, 130.1, 130.2, 134) auf einer dem Ölsumpf (50, 150.1, 150.2, 154) abgewandten Seite, vorzugsweise in Fließrichtung des Öls aus dem Ölsumpf (50, 150.1, 150.2, 154) in die Ablaufleitung (30, 130.1, 130.2, 134), einen Steigleitungsabschnitt (34) und eine Erhöhung (37), mittels der das Maximum des Ölfüllstandsniveaus vorbestimmt wird oder ist, aufweist.

6. Getriebe (6) nach einem der Ansprüche 1 bis 5, **dadurch gekennzeichnet, dass** an der Ablaufleitung (30, 130.1, 130.2, 134) auf einer dem Ölsumpf (50, 150.1, 150.2, 154) abgewandten Seite eine Saugeinrichtung, insbesondere eine Pumpe, angeordnet ist.

7. Getriebe (6) nach einem der Ansprüche 1 bis 6, **dadurch gekennzeichnet, dass** die Einlauföffnung (32) der Ablaufleitung (30, 130.1, 130.2, 134) im Bereich eines Sammelbereiches für im Ölsumpf (50, 150.1, 150.2, 154) enthaltene Partikel angeordnet ist.

8. Getriebe (6) nach einem der Ansprüche 2 bis 7, **dadurch gekennzeichnet, dass** die Ablaufleitung (30, 130.1, 130.2, 134) in einer Getriebestufe des Getriebes (6) ausgebildet ist oder in mehreren Getriebestufen (72.1, 72.2, 74) eines mehrstufigen Getriebes (6) jeweils wenigstens eine Ablaufleitung (30, 130.1, 130.2, 134) vorgesehen ist, wobei in einer oder in mehreren Getriebestufen (72.1, 72.2, 74) ein vorbestimmtes Ölfüllstandniveau zwischen einem Maximum des Ölfüllstandniveaus der jeweiligen Getriebestufe (72.1, 72.2, 74) und dem Minimum , größer als Null, des Ölfüllstandsniveaus der jeweiligen Getriebestufe bereitgestellt wird oder ist.

9. Mehrstufiges Getriebe (6) einer Windenergieanlage (W), **dadurch gekennzeichnet, dass** wenigstens zwei Getriebestufen (72.1, 72.2, 74) jeweils einen eigenen Ölsumpf (50, 150.1, 150.2, 154) mit jeweils einem vorbestimmten bereitgestellten Ölfüllstandsniveau, größer als Null, aufweisen, wobei die vorbestimmten Ölfüllstandsniveaus von verschiedenen Ölsümpfen (50, 150.1, 150.2, 154) zweier Getriebestufen (72.1, 72.2, 74), insbesondere im Stillstand des Getriebes (6), sich unterscheiden, wobei eine oder mehrere Getriebestufen (72.1, 72.2, 74) als Getriebe nach einem der Ansprüche 1 bis 8 ausgebildet sind.

10. Windenergieanlage (W) mit einem Getriebe (6) nach einem der Ansprüche 1 bis 8 oder mit einem mehrstufigen Getriebe (6) nach Anspruch 9.

## Claims

1. A gearbox (6) of a wind turbine (W) having an oil sump (50, 150.1, 150.2, 154), wherein at least one drain line (30, 130.1, 130.2, 134) arranged on or in the oil sump (50, 150.1, 150.2, 154) for oil from the oil sump (50, 150.1, 150.2, 154) has an inlet opening (32) arranged in the oil sump (50, 150.1, 150.2, 154) and wherein the inlet opening (32) of the drain line (30, 130.1, 130.2, 134) is arranged below a predetermined minimum greater than zero of an oil filling level of the oil sump (50, 150.1, 150.2, 154), **characterized in that**, in the drain line (30, 130.1, 130.2, 134) above the inlet opening (32), a penetration (35) is formed at the height of the minimum oil filling level through which oil from the oil sump (50, 150.1, 150.2, 154) can flow or stream so that a predetermined oil filling level is provided that is at least equal to or greater than the minimum oil filling level, preferably permanently, while the wind turbine (W) is operating and/or while the wind turbine (W) is at a standstill.

2. The gearbox (6) according to claim in 1, **characterized in that** an elevation (37) of the drain line (30, 130.1, 130.2, 134) is formed in the drain line (30, 130.1, 130.2, 134) above the inlet opening (32) over which oil from the oil sump (50, 150.1, 150.2, 154) can flow at the height of a maximum oil filling level so that a predetermined oil filling level is provided that is at least equal to or greater than the minimum oil filling level, preferably permanently, while the wind turbine (W) is operating and/or while the wind turbine (W) is at a standstill.

3. The gearbox (6) according to claim 2, **characterized in that** an oil filling level between a maximum oil filling level and the minimum oil filling level greater then zero is or will be provided by means of the at least one drain line (30, 130.1, 130.2, 134).

4. The gearbox (6) according to one of claims 1 to 3, **characterized in that** the drain line (30, 130.1, 130.2, 134) is designed like an inverted siphon or like an inverted U, preferably on its head, so that the oil filling level will be or is provided in a passive, independent or self-regulating manner.

5. The gearbox (6) according to one of claims 1 to 4, **characterized in that** the drain line (30, 130.1, 130.2, 134), on a side facing away from the oil sump (50, 150.1, 150.2, 154), preferably in the direction of flow of the oil from the oil sump (50, 150.1, 150.2, 154) into the drain line (30, 130.1, 130.2, 134), has a riser section (34) and an elevation (37) by means of which the maximum oil filling level will be or is predetermined.

6. The gearbox (6) according to one of claims 1 to 5, **characterized in that** a suction device, in particular a pump, is arranged on the drain line (30, 130.1, 130.2, 134) on a side facing away from the oil sump (50, 150.1, 150.2, 154).

7. The gearbox (6) according to one of claims 1 to 6, **characterized in that** the inlet opening (32) of the drain line (30, 130.1, 130.2, 134) is arranged in the area of a collection area for particles contained in the oil sump (50, 150.1, 150.2, 154).

8. The gearbox (6) according to one of claims 2 to 7, **characterized in that** the drain line (30, 130.1, 130.2, 134) is formed in a gear stage of the gear (6), or at least one drain line (30, 130.1, 130.2, 134) is provided in a plurality of gear stages (72.1, 72.2, 74) of a multistage gearbox (6), wherein in one or more gear stages (72.1, 72.2, 74), a predetermined oil filling level will be or is provided between a maximum oil filling level of the respective gear stage (72.1, 72.2, 74) and the minimum oil filling level greater than zero of the respective gear stage.

9. A multistage gearbox (6) of a wind turbine (W), **characterized in that** at least two gear stages (72.1, 72.2, 74) each have their own oil sump (50, 150.1, 150.2, 154), each with a predetermined, provided oil filling level greater than zero, wherein the predetermined oil filling levels of different oil sumps (50, 150.1, 150.2, 154) of two gear stages (72.1, 72.2, 74) differ, in particular when the gearbox (6) is at a standstill, wherein one or more gear stages (72.1, 72.2, 74) are designed as gearboxes according to one of claims 1 to 8.

10. A wind turbine (W) with a gearbox (6) according to one of claims 1 to 8, or with a multistage gearbox (6) according to claim 9.

## Revendications

1. Boîte à engrenages (6) pour une installation éolienne (W) comprenant un carter d'huile (50,150.1, 150.2, 154), dans laquelle, sur ou dans le carter d'huile (50, 150.1, 150.2, 154), est disposé au moins une conduite de vidange (30, 130.1, 130.2, 134) de l'huile hors du carter d'huile (50, 150.1, 150.2, 154), une ouverture d'entrée (32) étant aménagée dans le carter d'huile (50, 150.1, 150.2, 154), et l'ouverture d'entrée (32) de la conduite de vidange (30, 130.1, 130.2, 134) étant aménagée au-dessous d'un minimum prédéterminé, supérieur à zéro, du niveau de l'huile remplissant le carter d'huile (50, 150.1, 150.2, 154), **caractérisée en ce que** dans la conduite de vidange (30, 130.1, 130.2, 134) au-dessus de l'ouverture d'entrée (32), il est aménagé une ouverture (35) d'écoulement ou perméable à un flux, à la hauteur du niveau de remplissage d'huile minimum de l'huile du carter d'huile (50, 150.1, 150.2, 154), de sorte qu'il est obtenu, de préférence en permanence, un niveau de remplissage d'huile prédéterminé, au moins égal ou supérieur à la valeur minimale du niveau de remplissage d'huile pendant le fonctionnement de l'installation l'éolienne (W) et / ou pendant l'arrêt de l'installation l'éolienne (W).

2. Boîte à engrenages (6) selon la revendication 1, **caractérisée en ce que** dans la conduite de vidange (30, 130.1, 130.2, 134) au-dessus de l'ouverture d'entrée (32), il est aménagé une élévation submersible à la hauteur du niveau de remplissage d'huile maximum du carter d'huile (50, 150.1, 150.2, 154) de la conduite de vidange (30, 130.1, 130.2, 134), de sorte qu'il est obtenu, de préférence de manière permanente, qu'un niveau de remplissage d'huile prédéterminé est au moins égal ou inférieur à la valeur maximale du niveau de remplissage d'huile durant le fonctionnement de l'installation éolienne (W) et / ou pendant l'arrêt de l'installation éolienne (W).

3. Boîte à engrenages (6) selon la revendication 2, **caractérisée en ce qu'**au moyen d'au moins une conduite de vidange (30, 130.1, 130.2, 134), un niveau de remplissage d'huile est prévu entre un maximum du niveau de remplissage d'huile et un minimum, supérieur à zéro, du niveau de remplissage d'huile.

4. Boîte à engrenages (6) selon l'une quelconque des revendications 1 à 3, **caractérisée en ce que** la conduite de vidange (30, 130.1, 130.2, 134) est formée à la manière d'un siphon renversé, soit par l'intermédiaire d'un U renversé, de préférence à l'envers, de telle sorte que le niveau de remplissage d'huile est fournie automatiquement ou par autorégulation d'une manière passive.

5. Boîte à engrenages (6) selon l'une des revendications 1 à 4, **caractérisée en ce que** la conduite de vidange (30, 130.1, 130.2, 134) comprend, sur un côté opposé du carter d'huile (50, 150.1, 150.2, 154), de préférence dans le sens d'écoulement de l'huile à partir du carter d'huile (50, 150.1, 150.2, 154) dans la conduite de vidange (30, 130.1, 130.2, 134), une section de colonne montante (34) et une élévation (37) au moyen desquels le maximum du niveau de remplissage d'huile est prédéterminé.

6. Boîte à engrenages (6) selon l'une quelconque des revendications 1 à 5, **caractérisée en ce que**, sur le côté opposé à la conduite de vidange (30, 130.1, 130.2, 134) d'un carter d'huile (50, 150.1, 150.2, 154), est disposé un dispositif d'aspiration, en particulier une pompe.

7. Boîte à engrenages (6) selon l'une des revendications 1 à 6, **caractérisée en ce que** l'ouverture d'entrée (32) de la conduite de vidange (30, 130.1, 130.2, 134) est située dans la région d'une zone de collecte des particules contenues dans le carter d'huile (50, 150.1, 150.2, 154).

8. Boîte à engrenages (6) selon l'une des revendications 2 à 7, **caractérisée en ce que** la conduite de vidange (30, 130.1, 130.2, 134) est formée dans un étage d'engrenages de la boîte à engrenages (6) ou dans une pluralité d'étages (72.1, 72.2, 74) d'une boîte à engrenages à plusieurs étages (6), dans chaque cas, au moins une conduite de vidange (30, 130.1, 130.2, 134) est prévue, dans laquelle, dans un ou plusieurs des étages (72.1, 72.2, 74), un niveau de remplissage d'huile prédéterminé est prévu entre un maximum du niveau de remplissage d'huile de chaque étage d'engrenages (72.1, 72.2, 74) et un minimum, supérieur à zéro, du niveau de remplissage d'huile de chaque étage d'engrenages.

9. Boîte à engrenages à plusieurs étages (6) d'une installation éolienne (W), **caractérisée en ce qu'**au moins deux étages d'engrenages (72.1, 72.2, 74) ont chacun leur propre carter d'huile (50, 150.1, 150.2, 154) ayant chacun un niveau prédéterminé de niveau d'huile supérieure à zéro, lesdits niveaux prédéterminés de niveau d'huile des différents carters d'huile (50, 150.1, 150.2, 154) des deux étages d'engrenages (72.1, 72.2, 74), en particulier lorsque la boîte à engrenages (6) est à l'arrêt, étant différents, dans laquelle un ou plusieurs des étages d'engrenages (72.1, 72.2, 74) sont réalisés sous la forme d'une boîte à engrenages selon l'une quelconque des revendications 1 à 8.

10. Installation éolienne (W) comprenant une boîte à engrenages (6) selon l'une quelconque des revendications 1 à 8 ou comprenant une boîte à engrenages à plusieurs étages (6) selon la revendication 9.
